# EUROPÄISCHE PATENTANMELDUNG

(11) **EP 2 375 119 A1**
(43) Veröffentlichungstag der Anmeldung: **12.10.2011**
(21) Anmeldenummer: 11002674.7
(22) Anmeldetag: 31.03.2011
(51) Int. Cl.: F16L 27/04

(54) **Rohrkupplung für Hochdruckrohre**

(30) Priorität: 12.04.2010 DE 102010014686
(71) Anmelder: Röhrenwerk Kupferdreh Carl Hamm GmbH, 45257 Essen (DE)
(72) Erfinder: Kernchen, Thomas, 45739 Oer-Erkenschwick (DE); Schlaupitz, Jörg, 44625 Herne (DE)
(74) Vertreter: Gesthuysen, Michael

(57) **Zusammenfassung**

Beschrieben und dargestellt ist eine Rohrkupplung (1) zur Verbindung von Hochdruckrohrleitungen, umfassend eine mit einer ersten Rohrleitung (2) verbindbare Kupplungspfanne (3) und einen mit einer zweiten Rohrleitung (4) verbindbaren Kugelkopf (5), wobei die Kupplungspfanne (3) eine Kupplungsinnenfläche (6), der Kugelkopf (5) eine korrespondierende Kugelaußenfläche (7) und die Kupplungspfanne (3) und der Kugelkopf (5) jeweils einen konstanten Strömungsquerschnitt (8, 9) aufweisen, und wobei im Montagezustand der Kugelkopf (5), in Abhängigkeit von der Neigung (α) der Strömungsquerschnitte (8, 9) zueinander, zumindest mit einem Teil seiner Kugelaußenfläche (7) dichtend gegen eine in einer Nut (10) in der Kupplungsinnenfläche (6) vorgesehene Dichtung (11) gepresst ist, so dass die Strömungsquerschnitte (8, 9) der Kupplungspfanne (3) und des Kugelkopfes (5) strömungstechnisch miteinander verbunden sind.

Eine Rohrkupplung, bei der eine zu große Kontaktkraft verhindert wird und die ein Eindringen von Schmutz verhindert wird dadurch realisiert, dass ein Bundring (12) vorgesehen ist, dessen Innenfläche (13) an die gewölbte Kugelaußenfläche (7) derart angepasst ist, dass der Bundring (12) auf der rohrleitungsseitigen Wölbungsseite (7a) der Kugelaußenfläche (7) zumindest teilweise anlegbar ist, dass auf der Außenfläche (14) des Bundrings (12) und auf der Außenfläche (15) der Kupplungspfanne (3) jeweils eine umlaufende Kante (16, 17) mit einer geneigten Seitenfläche (18, 19) vorgesehen ist, und dass im Montagezustand die Kante (17) der Kupplungspfanne (3) und die Kante (16) des Bundrings (12) von einer Kupplungsschelle (20) formschlüssig umgriffen werden, wobei die Kupplungsschelle (20) eine auf die Mittelachse (A) des Strömungsquerschnitts (8) der Kupplungspfanne (3) gerichtete Umfangskraft auf die geneigten Seitenflächen (18, 19) der umlaufenden Kanten (16, 17) ausübt, wobei durch die Neigung der Seitenflächen (18, 19) eine Kraftkomponente orthogonal zur Umfangskraft von der Kupplungsschelle (3) auf die Kanten (16, 17) wirkt, so dass die rohrleitungsabgewandte Wölbungsseite (7b) der Kugelaußenfläche (7) und die Dichtung (11) durch die Kupplungsschelle (20) gegeneinander gepresst werden.

## Beschreibung

Die Erfindung betrifft eine Rohrkupplung zur Verbindung von Hochdruckrohrleitungen, umfassend eine mit einer ersten Rohrleitung verbindbare Kupplungspfanne und einen mit einer zweiten Rohrleitung verbindbaren Kugelkopf. Die Kupplungspfanne weist eine Kupplungsinnenfläche, der Kugelkopf eine korrespondierende Kugelaußenfläche und jeweils die Kuppelpfanne und der Kugelkopf einen konstanten Strömungsquerschnitt auf, wobei im Montagezustand der Kugelkopf, in Abhängigkeit von der Neigung der Strömungsquerschnitte zueinander, zumindest mit einem Teil seiner Kugelaußenfläche dichtend gegen eine in einer Nut in der Kupplungsinnenfläche vorgesehene Dichtung gepresst ist, so dass die Strömungsquerschnitte der Kupplungspfanne und des Kugelkopfes strömungstechnisch miteinander verbunden sind.

Aus dem Stand der Technik sind gattungsgemäße Rohrkupplungen bekannt, bei denen die Verbindungskraft, mit der der Kugelkopf gegen die Dichtung bzw. die Kupplungsinnenfläche gepresst wird, durch parallel zum Strömungsquerschnitt der Kupplungspfanne wirkende Schrauben hervorgerufen wird. An der Kupplungspfanne ist dazu einstückig ein Flansch ausgebildet, der mit einem über die rohrseitige Wölbungsseite des Kugelkopfes geschobenen Flansch zusammenwirkt, so dass die durch die beiden Flansche hindurchgeführten Schrauben eine Dichtkraft zwischen zumindest einem Teil der Kugelaußenfläche des Kugelkopfes und der Dichtung in der Kupplungsinnenfläche hervorruft. Die Wirkrichtung der durch die Verschraubung hervorgerufenen Kraft ist dabei parallel zur tatsächlichen Wirkrichtung der erforderlichen Dichtkraft.

Der Neigungswinkel zwischen den Strömungsquerschnitten des Kugelkopfes und der Kupplungspfanne ist durch eine Schwenkbewegung des Kugelkopfes in der Kupplungsinnenfläche der Kupplungspfanne einstellbar und durch Anziehen der Schrauben gegeneinander fixierbar, so dass eine Einstellung bzw. Veränderung des Neigungswinkels nur bei gelösten Schrauben möglich ist.

Wenn von einem konstanten Strömungsquerschnitt der Kupplungspfanne und des Kugelkopfes die Rede ist, dann ist damit der für die Strömung relevante Querschnitt über die Längserstreckung des jeweiligen Bauteils gemeint. Insbesondere ist dabei von Bedeutung, dass der Kugelkopf über die Kupplungsinnenfläche in die Kupplungspfanne hineingreift, so dass der relevante Strömungsquerschnitt des Kugelkopfes eine wesentlich längere Erstreckung hat, als der lediglich relativ kurze Strömungsabschnitt der Kupplungspfanne.

Die aus dem Stand der Technik bekannte Rohrkupplung weist unter anderem den Nachteil auf, dass zwischen die beabstandeten Flansche Schmutz eindringen kann, der bei einem nachfolgenden Lösen der Rohrkupplung in die Rohrleitungen eindringen kann oder die Oberflächen der Kupplungsinnenfläche oder der Kugelaußenfläche beschädigt. Ferner ist es nachteilig, dass durch ein beliebig festes Anziehen der Schrauben eine zu große Kontaktkraft über die Flansche ausgeübt wird, so dass die Dichtung oder sogar die Kupplungsinnenfläche der Rohrkupplung beschädigt werden.

Ausgehend von dem vorgenannten Stand der Technik liegt der vorliegenden Erfindung die Aufgabe zugrunde, eine Rohrkupplung anzugeben, bei der eine zu große Kontaktkraft verhindert wird und die ein Eindringen von Schmutz verhindert.

Die Aufgabe ist bei einer gattungsgemäßen Rohrkupplung dadurch gelöst, dass ein Bundring vorgesehen ist, dessen Innenfläche an die gewölbte Kugelaußenfläche derart angepasst ist, dass der Bundring zumindest teilweise auf der rohrleitungsseitigen Wölbungsseite der Kugelaußenfläche angelegt werden kann. Ferner ist auf der Außenfläche des Bundrings und auf der Außenfläche der Kupplungspfanne jeweils eine umlaufende Kante mit einer geneigten Seitenfläche vorgesehen, wobei im Montagezustand die Kante der Kupplungspfanne und die Kante des Bundrings von einer Kupplungsschelle formschlüssig umgriffen werden, wobei die Kupplungsschelle dabei eine auf die Mittelachse des Strömungsquerschnitts der Kupplungspfanne gerichtete Umfangskraft auf die geneigten Seitenflächen der umlaufenden Kanten ausübt. Durch die Neigung der Seitenflächen wird dabei eine Kraftkomponente orthogonal zur Umfangskraft von der Kupplungsschelle auf die Kanten bewirkt, so dass die rohrleitungsabgewandte Wölbungsseite der Kugelaußenfläche und die Dichtung durch die Kupplungsschelle gegeneinander gepresst werden. Die erfindungsgemäße Rohrkupplung weist den Vorteil auf, dass die Kugelaußenfläche im Montagezustand nahezu vollständig abgedeckt und geschützt ist, so dass keine Verschmutzung oder Beschädigung erfolgen kann. Ferner hat die erfindungsgemäße Rohrkupplung den Vorteil, dass durch die Kupplungsschelle eine definierte und beschränkte Kontaktkraft auf die Bauteile aufgebracht wird, so dass eine Beschädigung der Kupplungsinnenfläche oder der Dichtung beispielsweise durch ein zu starkes Anpressen der Kugelaußenfläche ausgeschlossen ist. Ein weiterer Vorteil der erfindungsgemäßen Rohrkupplung ist die Möglichkeit der zeitsparenden Montage der Verbindung zwischen dem Kugelkopf und der Kupplungspfanne, so dass diese Rohrkupplung auch als Schnellkupplung bezeichnet werden kann.

Die Kupplungspfanne weist am rohrseitigen Ende des Strömungsquerschnitts vorzugsweise einen Ansatz auf, an dem die Verbindung mit einer ersten Rohrleitung erfolgt. Die Verbindung zwischen der Rohrleitung und der Kupplungspfanne wird beispielsweise durch eine Schweißverbindung hergestellt, so dass der Strömungsquerschnitt der ersten Rohrleitung mit dem Strömungsquerschnitt der Kupplungspfanne verbunden ist. Der Strömungsquerschnitt der Kupplungspfanne erstreckt sich im Verlauf der weiteren Längserstreckung der Kupplungspfanne in die Kupplungsinnenfläche, die sich mit einem definierten Wölbungsradius öffnet. In der Kupplungsinnenfläche ist beispielsweise eine orthogonal zur Strömungsrichtung des Strömungsquerschnitts angeordnete umlaufende Nut vorgesehen, in die eine Dichtung eingelassen ist

Die Wölbung der Kupplungsinnenfläche korrespondiert mit der Wölbung der Kugelaußenfläche des Kugelkopfes, so dass sich im Montagezustand, die Kugelaußenfläche an die Kugelinnenfläche bzw, die Dichtung in der Kugelinnenfläche anschmiegt. Als Montagezustand wird der Zustand bezeichnet, in dem der Kugelkopf in die Kupplungspfanne eingebracht ist.

Der Kugelkopf umfasst vorzugsweise einen Strömungsquerschnitt, der von einer massiven Wand umgeben ist, die als gleichmäßig gewölbte und zur Kupplungsinnenfläche korrespondierende Kugelaußenfläche ausgestaltet ist. Zur Verbindung mit der zweiten Rohrleitung, weist der Kugelkopf einen Ansatz auf, an dem die zweite Rohrleitung beispielsweise angeschweißt ist, so dass der Strömungsquerschnitt des Kugelkopfes mit dem Strömungsquerschnitt der zweiten Rohrleitung verbunden ist und mit diesem übereinstimmt. Die rohrleitungsseitige Wölbungsseite der Kugelaußenfläche wird im Montagezustand vorzugsweise nahezu vollständig von der Innenfläche des Bundrings übergriffen.

Die Kupplungsschelle ist in ihrem Querschnitt etwa U-förmig ausgestaltet, wobei die inneren U-Flanken - ausgehend von der U-Grundfläche -nach außen öffnend geneigt sind, so dass sie jeweils - parallel - mit den geneigten Seitenflächen der umlaufenden Kanten des Bundrings und der Kupplungspfanne zusammenwirken. Die Kupplungsschelle muss dazu sehr stabil ausgestaltet sein und darf sich nicht durch die Kraftbeaufschlagung verformen, insbesondere dürfen die U-Flanken ihre Neigung nicht verändern. Die sich - im Montagezustand - gegenüberliegenden Kanten der Kupplungspfanne und des Bundrings werden gemeinsam formschlüssig von der Kupplungsschelle übergriffen, so dass aufgrund der Kraftwirkung von der Kupplungsschelle auf die geneigten Seitenflächen der ersten Kante der Kupplungspfanne und der zweiten Kante des Bundrings eine Kraft entsteht, die eine Kraftkomponente - eine Dichtkraft - orthogonal zur Umfangskraft aufweist und ein Gegeneinanderpressen der Kugelaußenfläche und der Dichtung bewirkt. Mit orthogonal zur Umfangskraft ist dabei die Richtung parallel zur Strömungsrichtung einer Flüssigkeit in der Kupplungspfanne gemeint. Die Dichtkraft wird folglich indirekt durch die Umfangskraft hervorgerufen.

Im nicht befestigten Zustand der Kupplungsschelle lässt sich der Kugelkopf leicht zwischen dem Bundring und der Kupplungspfanne bewegen, so dass der Neigungswinkel zwischen den Strömungsquerschnitten des Kugelkopfes und der Kupplungspfanne einstellbar ist. Nachdem die Kupplungsschelle fixiert ist, ist auch die Neigung zwischen den Strömungsquerschnitten fixiert, so dass keine Veränderung des Neigungswinkels mehr erfolgen kann. Wenn vom Neigungswinkel zwischen den Strömungsquerschnitten die Rede ist, dann ist damit stets ein Neigungswinkel zwischen den Mittelachsen der Strömungsquerschnitte gemeint.

Um insbesondere eine schnelle und beschädigungsfreie Montage durch ein einfaches Einbringen des Kugelkopfes in die Kupplungspfanne zu gewährleisten, ist gemäß einer Weiterbildung vorgesehen, dass die Kupplungsinnenfläche am rohrleitungsabgewandten Endbereich eine Erweiterung des Wölbungsradius aufweist. Die Kupplungsimlenfläche weist vorzugsweise eine im Wesentlichen gleichmäßig gewölbte Oberfläche auf, die an die Wölbung der Kugelaußenfläche des Kugelkopfes angepasst ist. In Richtung des rohrleitungsabgewandten Endes der Kupplungspfanne bzw. der Kupplungsinnenfläche ist nun der Wölbungsradius der Kupplungsinnenfläche erweitert, so dass sich ein Durchmesser der Öffnung der Kupplungspfanne ergibt, der geringfügig größer als der maximale Durchmesser des Kupplungskopfes ist, der in die Kupplungspfanne eingebracht wird.

Durch diese Erweiterung des Wölbungsradius ist der Kugelkopf auf einfache Weise in die Kupplungspfanne einbringbar, ohne dass eine Beschädigung der Kupplungspfanne durch ein Anstoßen oder Verklemmen des Kugelkopfes beim Einbringen erfolgen kann. Im Montagezustand ist der Kugelkopf aber trotzdem zuverlässig gehalten, da er zwischen Kupplungspfanne und Bundring eingefasst und gehalten ist. Die Erweiterung des Wölbungsradius hat ferner den Vorteil, dass der Kugelkopf beim Einführen in die Kupplungspfanne trichterartig auf die Dichtung geführt wird, wodurch stets eine optimale Position der Kugelaußenfläche in Bezug auf die Dichtung und dadurch eine optimale Dichtwirkung erzielt wird.

Die Kupplungsschelle übt im Montagezustand eine auf die Mittelachse des Strömungsquerschnitts der Kupplungspfanne gerichtete Umfangskraft auf die geneigten Kanten des Bundrings und der Kupplungspfanne aus, wobei gemäß einer vorteilhaften Weiterbildung vorgesehen ist, dass die Kupplungsschelle in ihrer umfänglichen Erstreckung mindestens eine Unterbrechung aufweist, über die sich mindestens ein Spannmittel erstreckt. Die Kupplungsschelle ist dabei im Wesentlichen ringförmig ausgestaltet, weist jedoch in ihrem Umfang mindestens eine Unterbrechung auf, so dass sich die Kupplungsschelle auch bei bereits zusammengesteckter Rohrkupplung über die Rohrkupplung stülpen lässt, so dass ein Umgreifen der umlaufenden Kanten durch die Kupplungsschelle erfolgen kann.

Damit die Kupplungsschelle eine Umfangskraft auf die geneigten Seitenflächen der umlaufenden Kanten aufbringen kann, erstreckt sich über die Unterbrechung wenigstens ein Spannmittel, das im Montagezustand ein Zusammenziehen der beiden Enden der Unterbrechung und damit eine Reduzierung des Innendurchmessers der Kupplungsschelle verursacht, wodurch eine gleichmäßige Umfangskraft auf die umlaufenden Kanten, insbesondere auf deren geneigte Seitenflächen, aufgebracht wird. Um die Montage der Kupplungsschelle weiter zu vereinfachen, weist die Kupplungsschelle beispielsweise an der auf dem Umfang der Unterbrechung gegenüberliegenden Seite ein Scharnier auf, so dass die Kupplungsschelle nahezu beliebig weit geöffnet werden kann, was sich insbesondere bei großen Rohrdurchmessern als vorteilhaft erwiesen hat.

Um eine vorteilhafte gleichmäßige Umfangskraft bereits vom Beginn der Montage zu gewährleisten, hat es sich als besonders vorteilhaft herausgestellt, wenn die Kupplungsschelle zweiteilig ausgestaltet ist und sich über die im Montagezustand entstehenden Unterbrechungen jeweils ein Spannmittel erstreckt. Diese Weiterbildung gewährleistet, dass der Innendurchmesser der Kupplungsschelle durch die Spannmittel an mindestens zwei Stellen auf ihrem Umfang während der Montage gleichmäßig reduziert wird, wodurch ein ungleichmäßiges Aufbringen der Umfangskraft auf die Bauteile, beispielsweise durch Verkanten oder Verhaken der Kupplungsschelle, zuverlässig verhindert wird.

Als ein besonders bevorzugtes Spannmittel haben sich Schrauben herausgestellt, da durch das Zusammenschrauben eine gleichmäßige Kraftaufbringung realisiert wird und nach dem Montageprozess eine zuverlässige Befestigung, auch bei Vibrationen innerhalb der Rohrleitungen, gewährleistet ist.

Bei Verwendung der Rohrkupplung als Schnellkupplung ist vorzugsweise vorgesehen, dass das Spannmittel ein Schnellspanner ist, wobei eine Spannkraft durch das Umlegen eines Spannhebels erzeugt wird. Der Schnellspanner erstreckt sich dabei über die Unterbrechung innerhalb der Kupplungsschelle, wobei durch das Umlegen eines Spannhebels die beiden Enden des Schnellspanners zusammengezogen werden, wodurch der Innendurchmesser der Kupplungsschelle reduziert wird und eine Umfangskraft auf die umlaufenden Kanten bewirkt wird. Durch den Schnellspanner lässt sich die Kupplungsschelle und damit die gesamte Rohrkupplung sehr schnell und einfach montieren oder demontieren.

Zur Abdichtung der Verbindung zwischen dem Kugelkopf und der Kupplungspfanne ist es von besonderer Bedeutung, dass zumindest ein Teil der Kugelaußenfläche stets in dichtenden Kontakt mit der Dichtung in der Kupplungsinnenfläche steht, da ansonsten ein Austreten des unter Hochdruck in den Rohrleitungen geführten Fluids die Folge sein kann. Damit diese Dichtwirkung stets gewährleistet ist, ist gemäß einer bevorzugten Ausgestaltung vorgesehen, dass der Neigungswinkel zwischen den Sirömungsquerschnitten der Kupplungspfanne und des Kugelkopfes durch ein Anschlagen des Bundringes an einem Ansatz am Kugelkopf begrenzt ist.

Der Kugelkopf weist beispielsweise zur Anbindung an eine zweite Rohrleitung einen Ansatz auf, der zum Anschlagen des Bundringes dienen kann. Der Bundring erstreckt sich dazu so weit über die Kugelaußenfläche, dass durch ein Anschlagen des Bundringes an dem Ansatz des Kugelkopfs die Neigung der Strömungsquerschnitte zueinander in alle Raumrichtungen gleichmäßig begrenzt ist, wobei die Abmessungen des Bundrings dabei derart ausgestaltet sind, dass zumindest ein Teil der Kugelaußenfläche und die Dichtung in der Kupplungsinnenfläche - unabhängig von der tatsächlichen Neigung der Strömungsquerschnitte - stets in dichtendem Kontakt sind. Durch die Begrenzung des Neigungswinkels wird verhindert, dass der Kugelkopf so stark geneigt wird, dass kein Kontakt mehr mit der Dichtung besteht. Ferner ist die Abmessung des Bundrings vorzugsweise derart ausgelegt, dass der Neigungswinkel zwischen den Strömungsquerschnitten derart begrenzt ist, dass die in die Kupplungspfanne eingebrachte Endseite des Kugelkopfes im Wesentlichen nicht in den Strömungsquerschnitt der Kupplungspfanne hineinragt, wodurch strömungstechnisch ungünstige Verwirbelungen entstünden.

Hierbei hat sich als besonders vorteilhaft erwiesen, wenn der Neigungswinkel zwischen den Strömungsquerschnitten der Kupplungspfanne und des Kugelkopfes auf einen Winkel von etwa ±10°, bevorzugt auf einen Winkel von etwa ±7,5° beschränkt ist. Diese Neigungswinkel haben den Vorteil, dass sie stets gewährleisten, dass ein ausreichender Anpressdruck zwischen der Kugelaußenfläche und der Dichtung realisiert wird, wobei gleichzeitig eine ausreichende Flexibilität durch das Neigen der Rohrleitungen zueinander in der praktischen Anwendung realisiert ist. Wie zuvor bereits beschrieben, kann der Neigungswinkel durch die Erstreckung des Bundrings über die Kugelaußenfläche begrenzt werden, so dass der Kugelkopf mit einem Ansatz an den Bundring anschlägt.

Die Kontaktkraft, die durch das Aufbringen der Kupplungsschelle auf die umlaufenden Kanten, insbesondere auf die geneigten Seitenflächen, bewirkt wird, kann beispielsweise dadurch definiert werden, dass gemäß einer bevorzugten Ausgestaltung jeweils am rohrleitungsseitigen Fuß der umlaufenden Kanten sowohl der Kupplungspfanne als auch des Bundrings eine umlaufende Nut vorgesehen ist. Durch die Tiefe dieser Nut, kann die von der Kupplungsschelle auf die umlaufenden Kanten aufgebrachte maximale Kontaktkraft festgelegt werden. Durch eine Nut mit einer sehr geringen Tiefe, wird ein frühzeitiges Anliegen der Kupplungsschelle an der Basis der Nut hervorgerufen, wodurch die Umfangskraft nicht mehr ausschließlich auf die geneigten Seitenflächen der umlaufenden Kanten wirkt, sondern zusätzlich auf die umlaufenden Basisflächen der Nuten, was die Kontaktkraft in orthogonaler Richtung reduziert. Der Eingriff der U-Flanken der Kupplungsschelle in die Nuten hat ferner den Vorteil, dass durch diesen formschlüssigen Eingriff eine definierte Position der Kupplungsschelle auf den Bundring bzw. der Kupplungspfanne gewährleistet ist.

Für die Anwendung als Rohrkupplung für Hochduckrohrleitungen ist es besonders bevorzugt, wenn die Kupplungspfanne, der Kugelkopf und der Bundring dickwandig ausgestaltet sind. Die dickwandige Ausgestaltung hat den Vorteil, dass die Rohrkupplung wenig anfällig für Beschädigungen in rauen Arbeitsumgebungen ist, ferner hat die dickwandige Bauweise den Vorteil, dass große Kräfte aufgebracht werden können, ohne dass eine Beschädigung, z. B. durch eine Verformung der Bauteile, erfolgt. Die erfindungsgemäße Rohrkupplung eignet sich insbesondere bei Wasserleitungen im Gebirge, beispielsweise bei Wasserleitungen, an denen Schneekanonen angeschlossen sind, da hier sehr hohe Drücke von etwa 100 bar auftreten können. Nachdem der Neigungswinkel einmal eingestellt ist, ist in der Regel dann keine Änderung des Neigungswinkels mehr erforderlich.

Die Kupplungspfanne, der Bundring, der Kugelkopf und die Klemmschelle sind beispielsweise gegossen oder aus Vollmaterial herausgearbeitet, wobei sich als Materialien grundsätzlich Metalle, z. B. Stahl, Edelstahl, Kupfer, oder Kunststoffe eignen.

Im Einzelnen gibt es nun eine Vielzahl von Möglichkeiten die erfindungsgemäße Rohrkupplung auszugestalten und weiterzubilden. Dazu wird verwiesen sowohl auf die dem Patentanspruch 1 nachgeordneten Patentansprüche, als auch auf die nachfolgende Beschreibung eines bevorzugten Ausführungsbeispiels in Verbindung mit der Zeichnung. In der Zeichnung zeigen:
- Fig. 1: ein Ausführungsbeispiel einer Rohrkupplung im geneigten Montagezustand,
- Fig.2: das Ausführungsbeispiel einer Rohrkupplung gemäß Fig. 1 im geraden Montagzustand und
- Fig. 3: eine Ansicht des Ausführungsbeispiels gemäß Fig. 2 in einem Schnitt orthogonal zur Strömungsrichtung.

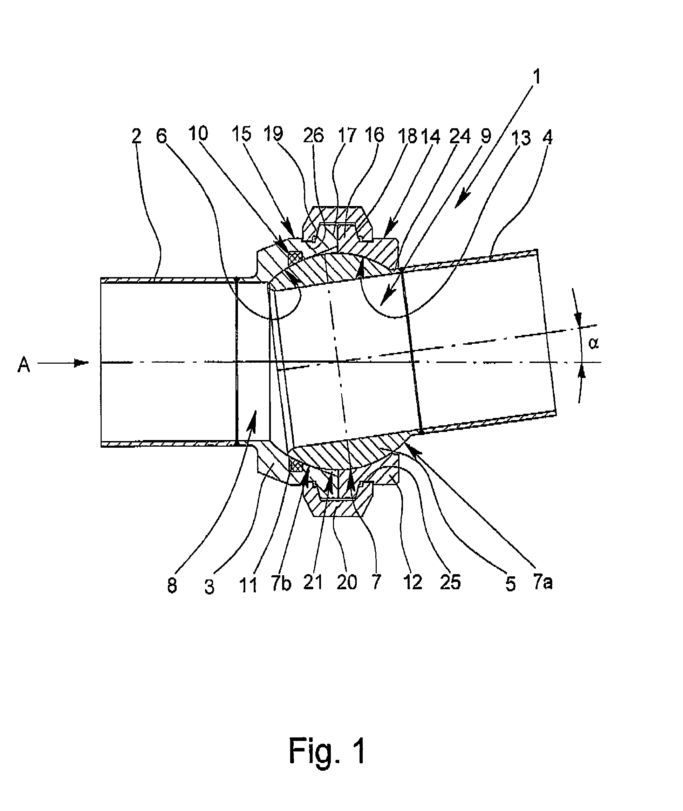

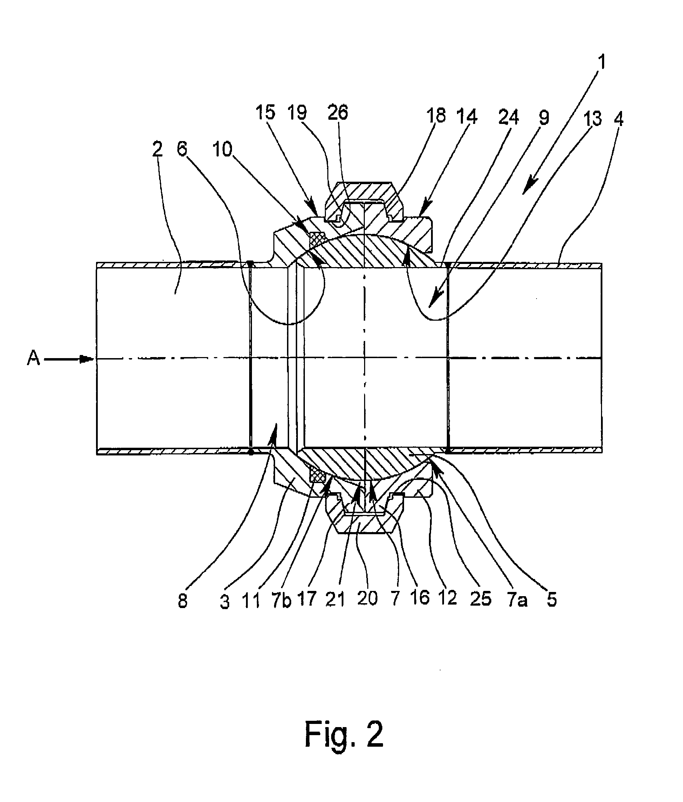

Die Fig. 1 und Fig. 2 zeigen ein Ausführungsbeispiel einer Rohrkupplung 1 im geneigten Zustand (Fig. 1) und im nicht geneigten Zustand (Fig. 2). Die Rohrkupplung 1 umfasst eine mit einer ersten Rohrleitung 2 verbindbare Kupplungspfanne 3 und einen mit einer zweiten Rohrleitung 4 verbindbaren Kugelkopf 5. Die erste Rohrleitung 2 und die Kupplungspfanne 3 bzw. die zweite Rohrleitung 4 und der Kugelkopf 5 sind jeweils durch eine Schweißnaht miteinander verbunden.

Die Kupplungspfanne 3 weist eine Kupplungsinnenfläche 6 auf und der Kugelkopf 5 weist eine zur Kupplungsinnenfläche 6 korrespondierende Kugelaußenfläche 7 auf. Die Kupplungspfanne 3 weist ferner einen ersten Strömungsquerschnitt 8 und der Kugelkopf 5 einen zweiten Strömungsquerschnitt 9 auf, wobei die Strömungsquerschnitte 8, 9 durch die Schweißverbindung mit der ersten Rohrleitung 2 bzw. mit der zweiten Rohrleitung 4 in Verbindung stehen.

Im Montagezustand ist der Kugelkopf 5 mit einem Teil seiner Kugelaußenfläche 7 dichtend gegen eine in einer Nut 10 in der Kupplungsinnenfläche 6 vorgesehene Dichtung 11 gepresst, so dass die Strömungsquerschnitte 8, 9 der Kupplungspfanne 3 und des Kugelkopfes 5 strömungstechnisch miteinander verbunden sind. In der Fig. 1 ist dargestellt, dass der Strömungsquerschnitt 9 des Kugelkopfes 5 mit einer Neigung α gegenüber den Strömungsquerschnitt 8 der Kupplungspfanne 3 geneigt ist.

Fig. 2 zeigt das Ausführungsbeispiel gemäß Fig. 1 im geraden Zustand ohne Neigung, wobei die Strömungsquerschnitte 8, 9 unmittelbar aufeinander ausgerichtet sind. Gegenüberliegend der Kupplungspfanne 3 ist ein Bundring 12 vorgesehen, dessen Innenfläche 13 an die gewölbte Kugelaußenfläche 7 derart angepasst ist, dass der Bundring 12 auf der rohrleitungsseitigen Wölbungsseite 7a der Kugelaußenfläche 7 zumindest teilweise anliegt, ohne dass der Bundring 12 über den Kugelkopf 5 hinaus bewegt werden kann. Dadurch lässt sich der Kugelkopf 5 über den Bundring 12 verspannen. Auf einer ersten Außenfläche 14 des Bundrings 12 ist eine erste umlaufende Kante 16 und auf einer zweiten Außenfläche 15 der Kupplungspfanne 3 eine zweite umlaufende Kante 17 vorgesehen. Die erste umlaufende Kante 16 weist dabei eine erste geneigte Seitenfläche 18 und die zweite umlaufende Kante 17 eine zweite geneigte Seitenfläche 19 auf.

Im - in den Fig. 1 und 2 dargestellten - Montagezustand wird die Kante 17 der Kupplungspfanne 3 und die Kante 16 des Bundrings 12 von einer gemeinsamen Kupplungsschelle 20 formschlüssig umgriffen, so dass die Kupplungsschelle 20 eine auf die Mittelachse A des Strömungsquerschnitts 8 der Kupplungspfanne 3 gerichtete Umfangskraft auf die geneigten Seitenflächen 18, 19 ausübt. Durch die Neigung der Seitenflächen 18, 19 entsteht - resultierend aus der Umfangskraft - eine Kontaktkraft mit einer Kraftkomponente, die orthogonal zur Umfangskraft, also parallel zur Mittelachse A des Strömungsquerschnitts 8 der Kupplungspfanne 3, wirkt. Diese Kraftkomponente der Kontaktkraft bewirkt, dass die rohrleitungsabgewandte Wölbungsseite 7b der Kugelaußenfläche 7 und die Dichtung 11 durch die Kupplungsschelle 20 gegeneinander gepresst werden. Die nach außen geneigten U-Flanken der Kupplungsschelle 20 sind im Montagezustand jeweils im Wesentlichen parallel zu einer der korrespondierenden geneigten Seitenflächen 18, 19 ausgerichtet.

Die Kupplungsinnenfläche 6 hat an ihrem rohrleitungsabgewandten Endbereich eine Erweiterung 21 des Wölbungsradius, wodurch das Einbringen des Kugelkopfes 5 in die Kupplungspfanne 3 vereinfacht und eine Beschädigung von Kugelkopf 5 und Kupplungspfanne 3 verhindert wird. Ferner wird durch die Erweiterung 21 der Kugelkopf 5 stets trichterartig in Richtung der Dichtung 11 geführt, so dass stets eine optimale Dichtwirkung erzielt wird.

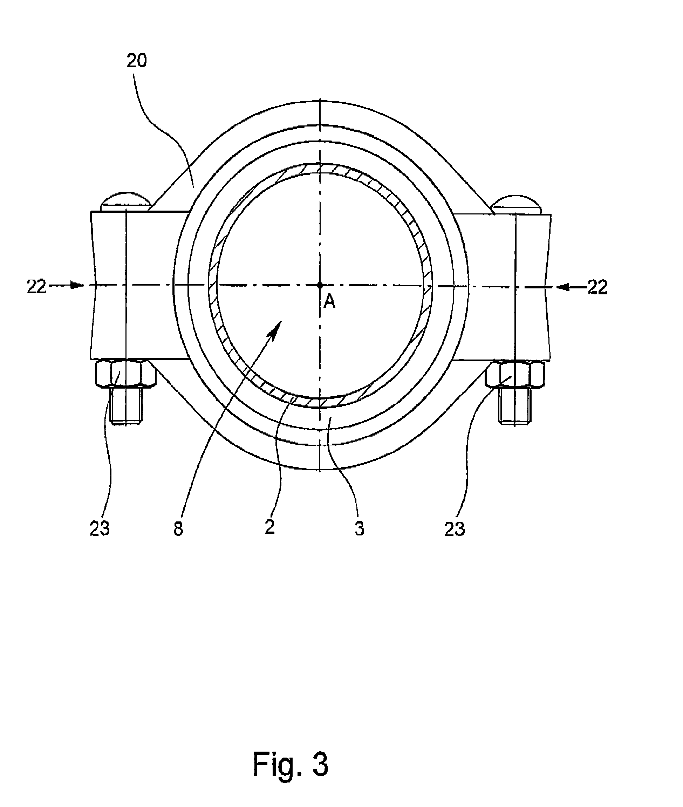

Die Kupplungsschelle 20 ist im in Fig. 3 dargestellten Ausführungsbeispiel mit zwei Unterbrechungen 22 in ihrer umfänglichen Erstreckung ausgestaltet. Die Unterbrechungen 22 sind jeweils von einem Spannmittel 23 übergriffen, das sich über die Unterbrechung 22 erstreckt und ein Zusammenziehen der beiden Hälften der Kupplungsschelle 20 und damit eine Reduzierung des Innendurchmessers der Kupplungsschelle 20 verursacht, woraus die auf die Mittelachse A des Strömungsquerschnitts 8 der Kupplungspfanne 3 gerichtete und auf die Kanten 16, 17 bzw. die geneigten Seitenflächen 18, 19 wirkende Umfangskraft resultiert. Die Spannmittel 23 sind bei diesem Ausführungsbeispiel als Schrauben ausgestaltet, die sich tangential zum Strömungsquerschnitt 8 und orthogonal zur Mittelachse A erstrecken.

Gemäß Fig. 1 ist der Neigungswinkel α zwischen den Strömungsquerschnitten 8, 9 der Kupplungspfanne 3 und des Kugelkopfes 5 durch ein Anschlagen des Bundringes 12 an einem Ansatz 24 am Kugelkopf 5 bzw. durch ein Anschlagen des Ansatzes 24 an dem Bundring 12 begrenzt. Wenn von dem Neigungswinkel α der Strömungsquerschnitte 8, 9 die Rede ist, dann ist damit stets ein Neigungswinkel α zwischen der Mittelachse A des Strömungsquerschnitts 8 der Kupplungspfanne 3 und der Mittelachse des Strömungsquerschnitts 9 des Kugelkopfes 5 gemeint. Der dargestellte Neigungswinkel α zwischen den Strömungsquerschnitten 8, 9 beträgt etwa 7,5°, wobei der Kugelkopf 5 bei diesem Ausgestaltungsbeispiel theoretisch in alle Raumrichmngen um etwa 7,5° neigbar ist.

Gemäß den Fig. 1 und 2 ist jeweils am rohrleitungsseitigen Fuß der umlaufenden Kante 16 des Bundrings 12 eine erste umlaufende Nut 25 und am rohrleitungsseitigen Fuß der zweiten umlaufenden Kante 17 der Kupplungspfanne 3 eine zweite umlaufende Nut 26 vorgesehen, wobei die U-Flanken der Kupplungsschelle 20 im Montagezustand in die Nuten 25, 26 eingreifen, in der Regel jedoch den Grund der Nuten 25, 26 nicht berühren.

## Patentansprüche

1. Rohrkupplung zur Verbindung von Hochdruckrohrleitungen, umfassend eine mit einer ersten Rohrleitung (2) verbindbare Kupplungspfanne (3) und einen mit einer zweiten Rohrleitung (4) verbindbaren Kugelkopf (5),
wobei die Kupplungspfanne (3) eine Kupplungsinnenfläche (6), der Kugelkopf (5) eine korrespondierende Kugelaußenfläche (7) und die Kupplungspfanne (3) und der Kugelkopf (5) jeweils einen konstanten Strömungsquerschnitt (8, 9) aufweisen,
und wobei im Montagezustand der Kugelkopf (5), in Abhängigkeit von der Neigung (α) der Strömungsquerschnitte (8, 9) zueinander, zumindest mit einem Teil seiner Kugelaußenfläche (7) dichtend gegen eine in einer Nut (10) in der Kupplungsinnenfläche (6) vorgesehene Dichtung (11) gepresst ist, so dass die Strömungsquerschnitte (8, 9) der Kupplungspfanne (3) und des Kugelkopfes (5) strömungstechnisch miteinander verbunden sind,
**dadurch gekennzeichnet,**
**dass** ein Bundring (12) vorgesehen ist, dessen Innenfläche (13) an die gewölbte Kugelaußenfläche (7) derart angepasst ist, dass der Bundring (12) auf der rohrleitungsseitigen Wölbungsseite (7a) der Kugelaußenfläche (7) zumindest teilweise anlegbar ist,
**dass** auf der Außenfläche (14) des Bundrings (12) und auf der Außenfläche (15) der Kupplungspfanne (3) jeweils eine umlaufende Kante (16, 17) mit einer geneigten Seitenfläche (18, 19) vorgesehen ist, und
**dass** im Montagezustand die Kante (17) der Kupplungspfanne (3) und die Kante (16) des Bundrings (12) von einer Kupplungsschelle (20) formschlüssig umgriffen werden, wobei die Kupplungsschelle (20) eine auf die Mittelachse (A) des Strömungsquerschnitts (8) der Kupplungspfanne (3) gerichtete Umfangskraft auf die geneigten Seitenflächen (18, 19) der umlaufenden Kanten (16, 17) ausübt, wobei durch die Neigung der Seitenflächen (18, 19) eine Kraftkomponente orthogonal zur Umfangskraft von der Kupplungsschelle (3) auf die Kanten (16, 17) wirkt, so dass die rohrleitungsabgewandte Wölbungsseite (7b) der Kugelaußenfläche (7) und die Dichtung (11) durch die Kupplungsschelle (20) gegeneinander gepresst werden.

2. Rohrkupplung nach Anspruch 1, **dadurch gekennzeichnet, dass** die Kupplungsinnenfläche (6) am rohrleitungsabgewandten Endbereich eine Erweiterung (21) des Wölbungsradius aufweist.

3. Rohrkupplung nach Anspruch 1 oder 2, **dadurch gekennzeichnet, dass** die Kupplungsschelle (20) in ihrer umfänglichen Erstreckung mindestens eine Unterbrechung (22) aufweist, wobei sich über die Unterbrechung (22) wenigstens ein Spannmittel (23) erstreckt.

4. Rohrkupplung nach einem der Ansprüche 1 bis 3, **dadurch gekennzeichnet, dass** die Kupplungsschelle (20) mindestens zweiteilig ausgestaltet ist und sich über die im Montagezustand entstehenden Unterbrechungen (22) jeweils ein Spannmittel (23) erstreckt.

5. Rohrkupplung nach Anspruch 3 oder 4, **dadurch gekennzeichnet, dass** das Spannmittel (23) eine Schraube ist.

6. Rohrkupplung nach Anspruch 3 oder 4, **dadurch gekennzeichnet, dass** das Spannmittel (23) ein Schnellspanner ist, wobei eine Spannkraft durch das Umlegen eines Spannhebels erzeugt wird.

7. Rohrkupplung nach einem der Ansprüche 1 bis 6, **dadurch gekennzeichnet, dass** der Neigungswinkel (α) zwischen den Strömungsquerschnitten (8, 9) der Kupplungspfanne (3) und des Kugelkopfes (5) durch ein Anschlagen des Bundringes (12) an einem Ansatz (24) am Kugelkopf (5) begrenzt ist.

8. Rohrkupplung nach Anspruch 7, **dadurch gekennzeichnet, dass** der Neigungswinkel (α) zwischen den Strömungsquerschnitten (8, 9) der Kupplungspfanne (3) und des Kugelkopfes (5) auf einen Winkel von etwa ±10°, bevorzugt etwa ±7,5° beschränkt ist.

9. Rohrkupplung nach einem der Ansprüche 1 bis 8, **dadurch gekennzeichnet, dass** am rohrleitungsseitigen Fuß der umlaufenden Kanten (16, 17) sowohl der Kupplungspfanne (3) als auch des Bundringes (12) jeweils eine umlaufende Nut (25, 26) vorgesehen ist.

10. Rohrkupplung nach einem der Ansprüche 1 bis 9, **dadurch gekennzeichnet, dass** die Kupplungspfanne (3), der Kugelkopf (5) und der Bundring (12) dickwandig ausgestaltet sind.
